# EUROPÄISCHE PATENTSCHRIFT

(11) **EP 1 541 594 B1**
(45) Veröffentlichungstag und Bekanntmachung des Hinweises auf die Patenterteilung: **02.04.2008**
(21) Anmeldenummer: 04027812.9
(22) Anmeldetag: 24.11.2004
(51) Int. Cl.: C08F 6/00, C08F 283/02, C08G 18/63

(54) **Verfahren zur Aufbereitung von Polymerdispersionen in Polyesterpolyolen**
Process for working-up of polymer dispersions in polyesterpolyols
Procédé pour la mise en forme de dispersions de polymère dans des polyols de polyester

(30) Priorität: 06.12.2003 DE 10357160
(43) Veröffentlichungstag der Anmeldung: 15.06.2005
(73) Patentinhaber: Bayer MaterialScience AG, 51368 Leverkusen (DE)
(72) Erfinder: Nefzger, Hartmut, Dr., 50259 Pulheim (DE); Pischedda, Eva, 41541 Dormagen (DE); Michels, Erhard, Dr., 51061 Köln (DE)

(56) Entgegenhaltungen:
- EP-A- 0 655 465
- US-A- 4 197 400

## Beschreibung

Die vorliegende Erfindung betrifft ein Verfahren zur Verringerung des Restmonomergehalts von Polymerdispersionen in Polyesterpolyolen.

Polymerdispersionen in Polyesterpolyolen bestehen aus einem hochmolekularen Polymeren oder Copolymeren, einem bei Raumtemperatur festen oder bevorzugt flüssigen Polyesterpolyol und einem zur Phasenstabilisierung notwendigen weiteren modifizierten Polyesterpolyol. Letzteres kann 0 bis 100 Gew.-% der Gesamtpolyol-Menge ausmachen. Derartige Polymerdispersionen enthalten herstellungsbedingt Restmengen an nicht umgesetzten, radikalisch polymerisierbaren Monomerem. Deren Gehalt kann so hoch sein, dass Geruchsbelästigungen auftreten können. Im Extremfall können sogar die Gesundheit gefährdende Konzentrationen auftreten. Daher ist es erforderlich, die Restmonomergehalte so gering wie möglich einzustellen.

Zur Entfernung von Restmonomeren aus Polymerschmelzen oder festen Polymerpartikeln kann Heißdampf eingesetzt werde. So lehrt EP-A 655 465 ein Verfahren zum Beseitigen restflüchtiger Anteile aus Polyacrylatschmelzen, bei dem das Abdampfen der flüchtigen Bestandteile im Vakuum erfolgt, Schleppmittel (z.B. Wasserdampf mit 2 bis 20 bar) bei Temperaturen von über 100°C in die Schmelzen eingeleitet wird und die Schmelzen gleichzeitig umgepumpt werden. U-A 4 197 400 offenbart ein Verfahren zur Entfernung von Restmonomeren aus Acrylnitril-Polymerpartikeln., bei dem die Partikel auf Temperaturen zwischen der Glas- und der Schmelztemperatur des Polymeren erhitzt werden und die austretenden Monomeren durch Heißgas oder Wasserdampf entfernt werden. Für hydrolyselabile Systeme erscheint der Einsatz von heißem Wasserdampf jedoch ungeeignet.

EP-A 259 537 lehrt, nach einem Umsatz der radikalisch polymerisierbaren Monomeren von über 85 % weiteren Radikalinitiator nachzusetzen, der den Umsatz der Monomeren deutlich verbessert und demzufolge den Restmonomergehalt verringert. Nachteilig ist jedoch neben den durch Zusatz von weiterem Radikalinitiator verbundenen Rohstoffkosten die nicht unbeträchtliche Erhöhung der Fertigungszeit bei einem derartigen Vorgehen.

EP-A 250 351 beschreibt ein Verfahren, bei dem in einem Polyesterpolyol der Molmasse 1000 bis 5000 g/mol mindestens ein ethenisch ungesättigtes Monomer polymerisiert wird. Das Polyesterpolyol enthält hierbei neben den üblichen Bausteinen Polycarbonsäure und Polyalkohol auch olefinische Bestandteile, insbesondere den Baustein Maleinsäureanhydrid. Zur Entfernung nicht umgesetzter, radikalisch polymerisierbarer Monomeren wird Vakuum angelegt. Die Effektivität eines derartigen Vorgehens ist angesichts der vergleichsweise hohen Viskosität von auf Polyesterpolyolen basierenden Dispersionen begrenzt. Ein niedriger Restgehalt an nicht umgesetzten, radikalisch polymerisierbaren Monomeren muss durch vergleichsweise lange Fertigungszeiten erkauft werden.

Aufgabe der vorliegenden Erfindung ist es daher, ein verbessertes Verfahren zur Reduktion des Restmonomergehalts in Polymerdispersionen auf Polyesterpolyol-Basis zur Verfügung zu stellen. Es wurde nun gefunden, dass man Polymerdispersionen mit Konzentrationen an nicht umgesetztem, radikalisch polymerisierbarem Monomer von weniger als 20 ppm herstellen kann, indem man Wasser als Schleppmittel zur an sich fertigen Dispersion zusetzt und anschließend im Vakuum wieder entfernt. Dabei ist besonders überraschend, dass durch die Wasserbehandlung unter diesen Bedingungen die inhärent hydrolyselabilen Polyesterpolyole nicht abgebaut werden.

Gegenstand der Erfindung ist ein Verfahren zur Reduktion des Restmonomergehalts von Polymerdispersionen in Polyesterpolyolen, bei dem man der Polymerdispersion Wasser als Schleppmittel zusetzt und dieses anschließend unter vermindertem Druck wieder entfernt.

Zur Entfernung des nicht umgesetzten, radikalisch polymerisierbaren Monomeren wird nach beendeter Polymerisation bei erhöhter Temperatur, bevorzugt 100°C bis 160°C und vermindertem Druck, bevorzugt 20 bis 200 mbar, Wasser kontinuierlich oder portionsweise zugegeben. Das Wasser kann hierbei sowohl in flüssigem oder in gasförmigem (z.B. Trägerdampf) Aggregatzustand vorliegen und wird besonders bevorzugt mit einem Tauchrohr unter Rühren in die flüssige Polymerdispersion eingeleitet. In einer bevorzugten Ausführungsform wird hierbei über mindestens eine Stunde kontinuierlich oder protionsweise Wasser zugegeben und kontinuierlich abdestilliert. Die Menge an zugesetztem Wasser beträgt bevorzugt 2 bis 10 Gew.-%, bezogen auf die Polymerdispersion. Nach beendeter Zugabe wird der Druck für mindestens 60 Minuten auf unter 20 mbar verringert, wobei die Temperatur mindestens 100°C beträgt.

Durch das erfindungsgemäße Verfahren lassen sich Polymerdispersionen erhalten, die einen Gehalt an nicht umgesetztem, radikalisch polymerisierbaren Monomerem von weniger als 20 ppm aufweisen. Durch das erfindungsgemäße Verfahren wird die Säurezahl der Polymerdispersion, die als Maß für die Hydrolyse der Basis-Polyesterpolyole herangezogen werden kann, nicht erhöht; die Polymerdispersionen weisen in der Regel auch nach der Behandlung eine Säurezahl von weniger als 1 mg KOH/g Polymerdispersion auf. Weiterhin wird durch das erfindungsgemäße Verfahren auch die Filtrierbarkeit bzw. die Feinteiligkeit der Polymerdispersion nicht beeinträchtigt.

### Beispiele

A.) Basis-Polyesterpolyole
B.) Modifizierte Polyesterpolyole
C.) Herstellung erfindungsgemäßer Dispersionen
D.) Vergleichsbeispiele

### A.) Herstellung der Basis-Polyesterpolyole

### A.1. Basis-Polyesterpolyol mit hohem Molekulargewicht

2779 g (26,22 Mol) Diethylenglykol, 813 g (13,12 Mol) Ethylenglykol und 5452 g (37,12 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 27,8 mg KOH/g und die Säurezahl zu 0,8 mg KOH/g.

### A.2. Basis-Polyesterpolyol mit niedrigem Molekulargewicht

3177 g (29,97 Mol) Diethylenglykol, 932 g (15,03 Mol) Ethylenglykol und 5256 g (36 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 120,1 mg KOH/g und die Säurezahl zu 0,3 mg KOH/g.

### B.) Herstellung modifizierter Polyesterpolyole

### B.1. Mercaptoessigsäure enthaltender Zusatzstoff

580 g (0,2 Mol) eines Polyadipates mit den Aufbaukomponenten Diethylenglykol und TMP mit einer zahlenmittleren Molmasse von 2900 g/mol und einer Funktionalität von ca. 3 (Desmophen^{®} 2300, Bayer AG), 18,4 g (0,2 Mol) Mercaptoessigsäure und 0,6 g p-Toluolsulfonsäure wurden in 100 ml Toluol gelöst. Bei 140-145°C wurden azeotrop 3,6 g (0,2 Mol) Wasser am Wasserabscheider abgeschieden. Das Toluol wurde anschließend abdestilliert. Die OH-Zahl betrug 47,7 mg KOH/g, die Säurezahl wurde zu 14,8 mg KOH/g und die Viskosität zu 20850 mPas (25°), bzw. 4020 mPas (50°C) bestimmt.

### C. Herstellung erfindungsgemäßer Dispersionen

### C.1. Herstellung einer Polymerdispersion mit verringertem Monomergehalt

476 g Polyadipat A.1. wurden mit 3 g modifiziertem Polyesterpolyol B.1., 100 g Toluol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 120°C erhöht.

Eine zuvor bereitete Lösung aus 600 g Polyadipat A.1., 21 g modifiziertem Polyesterpolyol B.1., 200 g Toluol, 6,4 g Azo-bis(2-methylbutyronitril)) und 800 g Styrol wurde im Verlauf von 2 Std. bei einer Drehzahl von zunächst 300 U/min. zudosiert, wobei die Drehzahl nach 20 min. auf 350 U/min. und nach weiteren 40 min. auf 400 U/min. erhöht wurde. Nach Ende dieser Zudosierung ließ man 5 min. nachreagieren.

Eine weitere zuvor bereitete Lösung aus 38 g Polyadipat A.1., 4 g modifiziertem Polyesterpolyol B.1., 100 g Toluol und 0,6 g Azo-bis(2-methylbutyronitril) wurde danach innerhalb von 30 min. zudosiert. Man ließ nach beendeter Zugabe für 3 Stunden bei 120°C nachreagieren. Anschließend wurde bei 120°C nach und nach der Druck von anfangs Normaldruck auf < 1 mbar vermindert, wobei Toluol und nicht umgesetztes Styrol weitgehend entfernt werden. Der Ansatz wurde für 3 Stunden bei 120°C und einem Druck von < 1 mbar weitergerührt. Über ein Tauchrohr wurden im Verlauf von 2 Stunden 150 ml Wasser eingezogen, wobei der Druck 120 mbar und die Temperatur 120°C betrug. Danach wurde für 2 Stunden bei einem Druck < 15 mbar bei 120°C entwässert. Man bestimmte die OH-Zahl zu 16,7 mg KOH/g. Der Polystyrolgehalt der Dispersion betrug zu diesem Zeitpunkt ca. 40 Gew.-%.

Zu diesem Ansatz wurden 1119 g Polyadipat A.2. in 30 Minuten eingerührt. Der noch warme Ansatz ließ sich über ein 100µm Sieb innerhalb von 5 min rückstandsfrei und ohne Druck anzulegen mit Hilfe einer beheizbaren Filternutsche abfiltrieren.

Die OH-Zahl der erhaltenen Dispersion betrug 57,1 mg KOH/g, die Säurezahl 0,2 mg KOH/g, die Viskosität bei 25, bzw. 50°C wurde zu 30520 bzw. 6040 mPas bestimmt. Der Füllgrad der Dispersion betrug 23,7 Gew.-%, der Gehalt an freiem Styrol 12 ppm.

### D. Vergleichsbeispiele

### D.1. Toluol als Mittel zur Verminderung des Restmonomergehalts

476 g Polyadipat A.1. wurden mit 3 g modifiziertem Polyesterpolyol B.1., 100 g Toluol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 120°C erhöht.

Eine zuvor bereitete Lösung aus 600 g Polyadipat A.1., 21 g modifiziertem Polyesterpolyol B.1., 200 g Toluol, 6,4 g Azo-bis(2-methylbutyronitril)) und 800 g Styrol wurde im Verlauf von 2 Std. bei einer Drehzahl von zunächst 300 U/min. zudosiert, wobei die Drehzahl nach 20 min. auf 350 U/min. und nach weiteren 40 min. auf 400 U/min. erhöht wurde. Nach Ende dieser Zudosierung ließ man 5 min. nachreagieren.

Eine weitere zuvor bereitete Lösung aus 38 g Polyadipat A.1., 4 g modifiziertem Polyesterpolyol B.1., 100 g Toluol und 0,6 g Azo-bis(2-methylbutyronitril) wurde danach innerhalb von 30 min. zudosiert. Man ließ nach beendeter Zugabe für 3 Stunden bei 120°C nachreagieren. Anschließend wurde bei 120°C nach und nach der Druck von anfangs Normaldruck auf < 1 mbar vermindert, wobei Toluol und nicht umgesetztes Styrol weitgehend entfernt werden. Der Ansatz wurde für 3 Stunden bei 120°C und einem Druck von <1 mbar weitergerührt. Über ein Tauchrohr wurden im Verlauf von 2 Stunden 150 ml Toluol eingezogen, wobei der Druck 120 mbar und die Temperatur 120°C betrug. Danach wurden für weitere 2 Stunden bei einem Druck < 15 mbar bei 120°C Toluolreste entfernt. Man bestimmte die OH-Zahl zu 17,0 mg KOH/g. Der Polystyrolgehalt der Dispersion betrug zu diesem Zeitpunkt ca. 40 Gew.-%.

Zu diesem Ansatz wurden 1167 g Polyadipat A.2. in 30 Minuten eingerührt. Der noch warme Ansatz ließ sich über ein 100µm Sieb innerhalb von 5 min rückstandsfrei und ohne Druck anzulegen mit Hilfe einer beheizbaren Filternutsche abfiltrieren.

Die OH-Zahl der erhaltenen Dispersion betrug 57,8 mg KOH/g, die Säurezahl 0,3 mg KOH/g, die Viskosität bei 25, bzw. 50°C wurde zu 27530 bzw. 5860 mPas bestimmt. Der Füllgrad der Dispersion betrug 23,1 Gew.-%, der Gehalt an freiem Styrol 110 ppm.

### D.2. Stickstoff als Mittel zur Verminderung des Restmonomergehalts

476 g Polyadipat A.1. wurden mit 3 g modifiziertem Polyesterpolyol B.1., 100 g Toluol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 120°C erhöht.

Eine zuvor bereitete Lösung aus 600 g Polyadipat A.1., 21 g modifiziertem Polyesterpolyol B.1., 200 g Toluol, 6,4 g Azo-bis(2-methylbutyronitril)) und 800 g Styrol wurde im Verlauf von 2 Std. bei einer Drehzahl von zunächst 300 U/min. zudosiert, wobei die Drehzahl nach 20 min. auf 350 U/min. und nach weiteren 40 min. auf 400 U/min. erhöht wurde. Nach Ende dieser Zudosierung ließ man 5 min. nachreagieren.

Eine weitere zuvor bereitete Lösung aus 38 g Polyadipat A.1., 4 g modifiziertem Polyesterpolyol B.1., 100 g Toluol und 0,6 g Azo-bis(2-methylbutyronitril) wurde danach innerhalb von 30 min. zudosiert. Man ließ nach beendeter Zugabe für 3 Stunden bei 120°C nachreagieren. Anschließend wurde bei 120°C nach und nach der Druck von anfangs Normaldruck auf < 1 mbar vermindert, wobei Toluol und nicht umgesetztes Styrol weitgehend entfernt werden. Der Ansatz wurde für 3 Stunden bei 120°C und einem Druck von < 1 mbar weitergerührt. Über ein Tauchrohr wurden im Verlauf von 2 Stunden ein starker Stickstoffstrom so eingezogen, dass der Druck zwischen 120 mbar und 200 mbar betrug, wobei die Temperatur bei 120°C gehalten wurde. Man bestimmte die OH-Zahl zu 17,2 mg KOH7g. Der Polystyrolgehalt der Dispersion betrug zu diesem Zeitpunkt ca. 40 Gew.-%.

Zu diesem Ansatz wurden 1199 g Polyadipat A.2. in 30 Minuten eingerührt. Der noch warme Ansatz ließ sich über ein 100µm Sieb innerhalb von 5 min rückstandsfrei und ohne Druck anzulegen mit Hilfe einer beheizbaren Filternutsche abfiltrieren.

Die OH-Zahl der erhaltenen Dispersion betrug 57,1 mg KOH/g, die Säurezahl 0,3 mg KOH/g, die Viskosität bei 25, bzw. 50°C wurde zu 30070 bzw. 6310 mPas bestimmt. Der Füllgrad der Dispersion betrug 24,2 Gew.-%, der Gehalt an freiem Styrol 70 ppm.

### D.3. Wasserbehandlung eines ungefüllten Polyesterpolyols

1500 g eines Polyadipats mit einer OH-Zahl von 55,8 mg KOH/g und einer Säurezahl von 0,6 mg KOH/g (Desmophen^{®} 2001, Bayer AG) wurden bei 130°C unter Rühren in einem Glaskolben, versehen mit Tropftrichter und Destillationsbrücke vorgelegt. Man gab im Verlauf von 2 Stunden über den Tropftrichter bei einem Druck von 140-150 mbar 300 g Wasser zu, wobei der Großteil des zugesetzten Wassers direkt wieder abdestillierte. Nach beendeter Wasserzugabe wurde zur vollständigen Entwässerung für 1 Std. volles Vakuum (< 15 mbar) angelegt. Man bestimmte die Säurezahl des Polyadipates zu 1,0 mg KOH/g.

Der Anstieg der Säurezahl auf 167 % des Ausgangswertes zeigt die inhärente Labilität von Polyesterpolyolen gegenüber hydrolytischen Bedingungen. Überraschenderweise tritt dieser Effekt nicht auf, wenn die Polyesterpolyole in Form von Polymerdispersionen vorliegen.

## Patentansprüche

1. Verfahren zur Reduktion des Restmonomergehalts von Polymerdispersionen in Polyesterpolyolen, bei dem man der Polymerdispersion Wasser als Schleppmittel zusetzt und dieses anschließend unter vermindertem Druck wieder entfernt.

2. Verfahren gemäß Anspruch 1, bei dem das Wasser bei 100°C bis 160°C und einem Druck von 20 bis 200 mbar kontinuierlich in die Polymerdispersion eingeleitet und kontinuierlich wieder abdestilliert wird.

3. Verfahren gemäß Anspruch 1 oder 2, bei dem die Menge an zugesetztem Wasser 2 bis 10 Gew.-% der Gesamtmenge der Polymerdispersion beträgt.

4. Verfahren nach einem der Ansprüche 1 bis 3, bei dem nach beendeter Wasserzugabe der Druck über der Polymerdispersion für mindestens 60 Minuten auf weniger als 20 mbar verringert wird, und die Temperatur der Polymerdispersion während dieser Zeit mindestens 100°C beträgt.

## Claims

1. A process for reducing the residual monomer content of polymer dispersions in polyesterpolyols in which water, as an entraining agent, is added to the polymer dispersion and this is then removed again under reduced pressure.

2. A process according to Claim 1, in which water at 100°C to 160°C and at a pressure of 20 to 200 mbar is introduced continuously into the polymer dispersion and is continuously distilled off again.

3. A process according to Claim 1 or 2, in which the amount of added water is 2 to 10 wt.% of the total amount of polymer dispersion.

4. A process according to Claims 1 to 3, in which, after completion of the addition of water, the pressure over the polymer dispersion is reduced to less than 20 mbar for at least 60 minutes and the temperature of the polymer dispersion during this time is at least 100°C.

## Revendications

1. Procédé pour réduire la teneur en monomères résiduels de dispersions de polymères dans des polyesterpolyols, dans lequel on ajoute à la dispersion de polymères de l'eau comme agent d'entraînement puis on retire celle-ci sous pression réduite.

2. Procédé selon la revendication 1 dans lequel l'eau est introduite en continu dans la dispersion de polymères à 100°C à 160°C et une pression de 20 à 200 mbar et est chassée en continu par distillation.

3. Procédé selon la revendication 1 ou 2 dans lequel la quantité d'eau ajoutée est 2 à 10 % en masse de la quantité totale de dispersion de polymères.

4. Procédé selon l'une des revendications 1 à 3 dans lequel, après la fin de l'addition d'eau, la pression au-dessus de la dispersion de polymères est réduite à moins de 20 mbar pendant au moins 60 min et la température de la dispersion de polymères est d'au moins 100°C pendant cette durée.
